(19) Europäisches Patentamt

European Patent Office

Office européen des brevets

(11) **EP 1 120 721 A2**

(12) **EUROPEAN PATENT APPLICATION**

(43) Date of publication:
01.08.2001 Bulletin 2001/31

(51) Int Cl.7: **G06F 17/30**

(21) Application number: 01300249.8

(22) Date of filing: 12.01.2001

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI** | (72) Inventors:<br>• **Turner, John**<br>**London SW5 5NX (GB)**<br>• **Brown, Daniel**<br>**London NW6 2NT (GB)** |
| (30) Priority: **14.01.2000 GB 0000923** | (74) Representative: **Collins, John David**<br>**Marks & Clerk,**<br>**57-60 Lincoln's Inn Fields**<br>**London WC2A 3LS (GB)** |
| (71) Applicant: **Applied Psychology Research Limited**<br>**London NW1 2DX (GB)** | |

(54) **Information retrieval system**

(57) An apparatus and method for retrieving information is described wherein a database stores a plurality of records. Each record comprises information and associated classification data. The classification data includes at least one value. The or each value comprises a predetermined subjective rating for the associated information in a category. User preference data is received from a user identifying at least one category of information to be searched for and a corresponding desired value for the or each category. The user preference data is compared with the classification data in the database to determine the relative fit of the classification data with the user preference data and information is retrieved from the database on the basis of the determined relative fit.

Fig 1

EP 1 120 721 A2

**Description**

The present invention generally relates to the retrieval of stored information and more particularly relates to the retrieval of stored information which is the closest match to a query.

Where a limited selection of information is stored, it is possible to review all available pieces of information before making a selection. As the amount of information available increases this ceases to be practical.

A known method of making a selection of stored information is to place different types of information in different categories and subcategories. Using such a classification technique information can be present or not present in a category. This enables a user to reduce the amount of information which must be reviewed prior to making a selection. However, in order to retrieve information, a user must ensure that his categories correspond identically with the categories into which information has been classified. If a user's categories are over-specific, no information may be retrieved at all.

In accordance with one aspect of the present invention, there is provided an apparatus and method in which a user is able to retrieve information which best matches user preferences which subjectively define the required information.

In accordance with a further aspect of the present invention, there is provided an apparatus and method for searching for and retrieving information using values which express numerically human perception of the information or something described by the information.

In accordance with a further aspect of the present invention, there is provided an apparatus for retrieving information, the apparatus comprising:

storage means storing a database comprising a plurality of records, each record comprising information and associated classification data, said classification data including at least one value, the or each value comprising a predetermined subjective rating for the associated information in a category;
receiving means for receiving user preference data identifying at least one said category of information to be searched for and a corresponding desired value for the or each category;
comparison means for comparing said user preference data with said classification data in said database to determine the relative fit of said classification data with said user preference data; and
retrieval means for retrieving information from said database on the basis of said determined relative fit.

In accordance with a further aspect of the present invention there is provided a method of retrieving information from a database, the database comprising a plurality of records, each record comprising information and associated classification data, said classification data including at least one value, each value comprising a predetermined subjective rating for the associated information in a category, the method comprising the steps of:

receiving user preference data identifying at least one said category of information to be searched for and a corresponding desired value for the or each category;
comparing said user preference data with said classification data to determine the relative fit of said classification data with said user preference data; and
retrieving information from said database on the basis of said determined relative fit.

The present invention allows a user to retrieve information which has previously been given subjective ratings in a number of categories, simply by entering desired subjective values for one or more selected categories. The entered subjective values are then matched with subjective values for the or each category for which values have been entered and information can be retrieved based on this matching.

The categories and subjective ratings for each category are based on human experience of the information itself or on something which is described or summarised by the stored information. Thus, the information can comprise, can describe, or can summarise anything about which someone can have an opinion. Categories are chosen based on human experience e.g. the sort of opinions that one might have of the information or the subject of the information, and the information itself i.e. the content of the information and the format of the information. The categories are chosen so that they define a range or continuum between two descriptive extremes which are perceived as emotionally opposite although they are not necessarily strictly opposite. The data stored in the database has associated classification data comprising at least one value in respective categories which have been predetermined by for example a panel of people or by some other method e.g. by seeking the opinion of a sample of a population. Thus the aim of the classification data is to provide values representing a subjective judgement of the content of the information or the subject of the information. A set of values thus forms a subjective profile for the information.

Thus, the information stored in the database can be anything which can be the subject of an opinion for example films, wines, music, literature, art, leisure activities such as holidays, restaurants and theatres. The categories used for the classification data associated with the information can define any facet of human experience associated with the subject of the information or the information itself. The use of a plurality of values for a plurality of categories allows a complex query to be built up to define a required profile for the information. The values stored for the categories define a profile for each piece of information or record in the database and thus the required profile can be matched to the profiles of each of the sets of information or records in order to try to determine the best match or matches. The best match or matches can then be retrieved.

In addition to the or each subjective values for the or each respective category, the associated classification data can additionally include at least one objective datum. Such an objective datum is one which is not the subject of human opinion and which can be said to comprise a fact. Such additional classification data can comprise conventional classification data and can be used in conjunction with the subjective values in order to provide profiles for the sets of information of records, and can be included in the input by a user to provide a more complete user profile for searching for and retrieving information from the database.

In one embodiment of the present invention the subject of the information in the database can be purchased and means is provided for receiving an order from a user for the subject of the information e.g. a book, a film, a holiday, a restaurant booking, a theatre booking or a wine. Where the subject of the information is itself information which is in electronically transmittable form e.g. an electronic book, electronic art, or a video signal. In such a system, where the database is provided centrally and queries are received from a remote user, the retrieved information is transmitted to the user and the resulting order signal causes the transmission of information to fulfil the order. The database need not however be provided centrally and instead may be provided locally. A central order system then simply receives orders for requested data which has been found as a result of the search and retrieval of information locally by a user. The ordered information e.g. video signal can then be downloaded to the user to fulfil the order.

The order signal may include information identifying a method of payment for the ordered information together with information identifying the ordered information.

In another embodiment of the present invention the database and a user interface can be provided at a single location to provide a user with the retrieved information resulting from the user preference data.

The matching of the user preference data and the classification data in the database can be carried out to determine a value indicative of the relative fit of the classification data with the user preference data and the information is retrieved from the database on the basis of this value. In one embodiment the value is determined as the sum of the squares of the difference between the classification data and the user preference data for all of the categories identified by the user preference data. In another embodiment the value is determined by determining an angular difference between vectors defined by the values of the classification data and the desired values of the user preference data for all of the categories identified by the user preference data.

As a result of the matching process a plurality of sets of information or records having the closest fit with the user preference data can be retrieved from the database. These may be retrieved in order of the values indicating the relative fit of classification data associated with the information and the user preference data. Alternatively, only one set of information or a record which has the closest fit to the user preference data may be retrieved.

In an embodiment, user preference data for each of the plurality of categories is compared with the classification data for respective categories individually to determine an individual relative fit for each category and information is retrieved from the database on the basis of each individual relative fit. Thus this embodiment not only provides information based on all of the categories i.e. using the whole of the profile entered by the user, but also information is provided for the relative fit for each category. This process may take place sequentially where the user preference data is entered by the user sequentially. Alternatively, where the user preference data is entered or transmitted as a complete profile, the information retrieved for each individual category can be calculated sequentially from the complete profile.

In an embodiment where the user preference data is entered sequentially, the relative fit of the classification data with the user preference data can be determined for all of the received user preference data as each is received. In this way a "running fit" is continuously calculated. Alternatively, the complete profile may be transmitted as a whole to the comparing means, or the comparing means may wait until it is indicated that no more user preference data is going to be entered before determining the relative fit.

The apparatus can include a user interface which comprises means for selecting at least one of the categories, input means for inputting a value for the or each category, said value comprising a subjective rating for information to be retrieved; transmitting means for transmitting information identifying the or each selected category and the or each respective value as the user preference data to the receiving means; means for obtaining the information retrieved by the retrieving means; and display means for displaying the retrieved information. Thus in this embodiment a user is able to interact with the apparatus to select a category and enter a value in order to search for and retrieve information by forming a profile subjectively describing the required information.

Preferably the interface includes means for generating a graphical illustration related to the or each input value to aid the user's perception of the input values and selected categories. Thus preferably the interface with the user is a graphical user interface.

The present invention can be embodied as a single apparatus or a network of apparatuses linked via communication means such as a telecommunications system, wide area network (WAN) or local area network (LAN). The present invention can be carried out on an individual computer having a storage means such as a hard disc drive or CD ROM for storing the database. The present invention can also be embodied by a network of such computers wherein the database is provided on one or more of the computers. The present invention can thus not only be embodied in an apparatus but also in a computer program stored on a storage medium for controlling a computer. The storage medium can comprise any conventional computer storage medium such as a floppy disc, hard disc, optical storage device such as a CD ROM, and memory devices such as non-volatile memory (Read Only Memory).

Embodiments of the present invention will now be described with reference to the accompanying drawings in which:

Fig. 1 is a schematic diagram of a general embodiment of the present invention;
Fig. 2 is a schematic diagram of a video on demand system to which the present invention may be applied;
Fig. 3 is a schematic diagram of a central server station of the video on demand system illustrated in Fig. 2;
Fig. 4 is a block diagram showing the contents of the database shown in Fig. 3;
Fig. 5 is a block diagram showing the contents of the read only memory of the central station;
Fig. 6 is a schematic diagram of a user station as shown in Fig. 2;
Fig. 7 is a block diagram showing the contents of the read only memory of a user station;
Fig. 8 is a flow diagram of the control program stored in the daily memory;
Fig. 9 is a screen display showing a display of different criteria;
Fig. 10 is a screen display showing a slide control;
Fig. 11 is a screen display showing a selection of suggestions;
Fig. 12 is a screen display showing a film review.
Fig. 13 is a schematic diagram of a further embodiment of the present invention; and
Fig. 14 is an example of a screen display for retrieving information about wines.

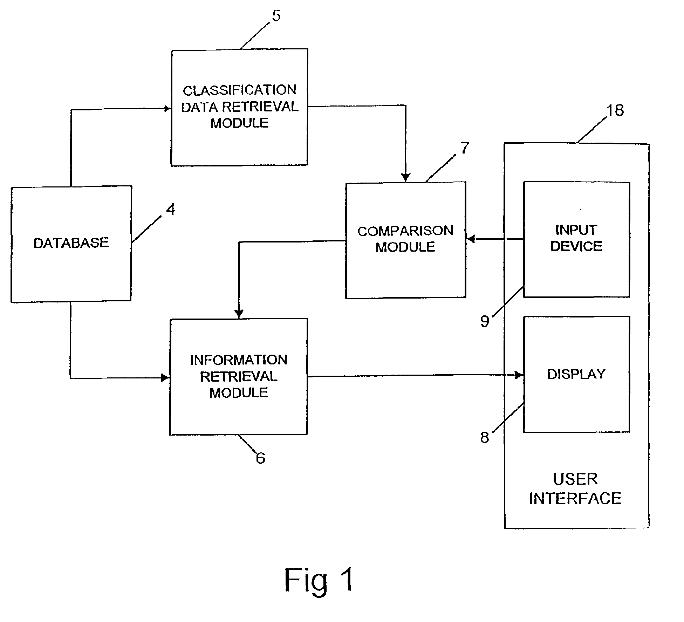

A general embodiment of the present invention will now be described with reference to Fig. 1. A database 4 is provided storing records. Each record comprises a set of information and associated classification data. Classification data includes at least one, and preferably a plurality of values. The or each value comprises a predetermined subjective rating for the associated information in a category. The classification data can also include objective data for the associated information.

A user interface 18 is provided and comprises an input device 9 for allowing a user to input user preference data which identifies at least one category of information to be searched for and a corresponding desired value for the or each category. The user interface 18 also includes a display 8 for displaying information retrieved as a result of the input user preference data. The input device 9 is connected to a comparison module 17 which receives classification data from the classification data retriever module 5 which in turn retrieves the classification data from the database 4. The input user preference data and the retrieved classification data is compared in the comparison module 7 in order to determine the relative fit thereof. On the basis of the relative fit the comparison module 7 controls an information retrieval module 6. The information retrieval module 6 retrieves information from the database 4 under the control of the comparison module 7 and passes the retrieved information onto the display 8 in the user interface 18.

Thus when a user enters user preference data in one or more categories, information which best matches the input user preference data is retrieved and displayed at the display 8. Information will always be retrieved since there is no requirement for an exact match between the input user preference data and the classification data. What is determined is a relative fit and the information which has the best relative fit is retrieved and displayed on the display 8.

The user interface 18 may or may not be provided at the same location as the database, the classification data retrieval module 5, the information module 6 and the comparison module 7. If the user interface 18 is provided remotely, connection can be made by any suitable communication arrangement such as a telecommunications network, a WAN, or a LAN.

An embodiment of the present invention will now be described in which the present invention is incorporated in a system for providing video on demand.

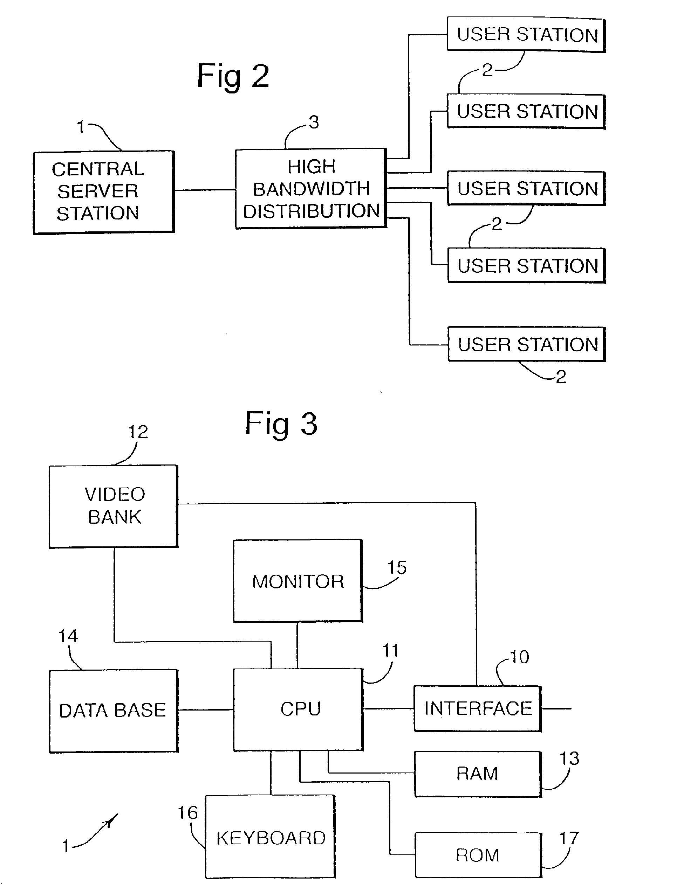

Fig. 2 shows a video on demand system comprising a central server station 1 which is connected to a plurality of user stations 2 via a high band width distribution system 3 such as a telephone network. A number of video films are stored at the central server station 1. When someone wishes to view a video, the user inputs selection data representative of his preferences via a user station 2. The selection data can then be transmitted to the central server station 1 via the high band width distribution system 3. When the central server station 1 receives selection data representative of a user's selection, this data is used to determine the films which correspond most closely to the user's selection as is described in detail later. Data relating to the films which most closely match the user's selection data is then sent from the central server station 1 to the user 2 via the high band width distribution system 3. A user can then review this data so as to be able to make an informed choice about which film he wishes to watch. When the user has decided he then inputs his final selection into the user station 2 which carries a signal representative of the choice to be sent to the central server station 1 via the high band width distribution system 3. When this signal is received by the central user station 1, the central user station 1 is caused to transmit a video signal of the film corresponding to the user's final selection back to the user station 2 via the distribution system 3. The user can then watch the film of his choice.

Fig. 3 is a block diagram showing the structure of the central server station 1 shown in Fig. 2. The central server station 1 comprises an interface 10 which can receive information from the high band width distribution system 3 and can also transmit information to the high band width distribution system 3.

The interface 10 stores a received signal so that it can be determined what type of signal has been received and how that signal should be processed.

The interface 10 is connected to a central processing unit 11 and a video bank 12 in which films and video clips are stored in correspondence with film and video clip numbers. The central processing unit 11 is also connected to the video bank 12, a random access memory 13, a database 14, a monitor 15, and a keyboard 16 and a read only memory 17. A control program is stored in the read only memory 17. When a signal is received from the high band width distribution system 3 by the interface 10, this is processed by the central processing unit 11 in accordance with the control program stored in the read only memory 17. The results of calculations by the central processing unit 11 are stored in the random access memory 13. The central processing unit 11 can also send a signal to the video bank 12 to instruct the video bank 12 to send a video signal to user station via the interface 10 and the high band width distribution system 3.

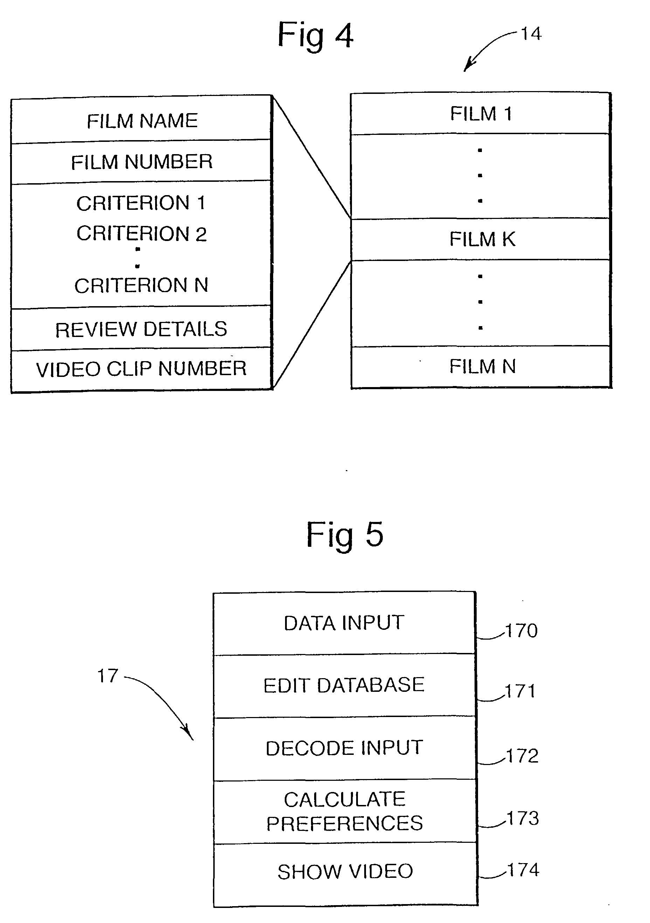

Fig. 4 is a block diagram of data within the database 14. For every video film stored in the video bank 12 there is an entry in the database 14. These entries consist of the name of the film to which they relate, a film number corresponding to a video stored in the video bank 12, values for a number of N criteria on which the film has been assessed, a text record of a review of the film and a video clip number associated with a video clip stored in the video bank 12.

The values of the N criteria associated with a film are representative of subjective assessments of the content of that film according to different criteria. The different criteria are each a range of possible subjective assessments of a film which range between two mutually exclusive, but not necessarily opposing extremes. The value of the criteria associated with a film is representative of relative subjective assessment of the film to those two extremes.

Table 1 below is an example of some of the criteria on which films may be assessed and example values for those criteria in relation to two films. In this example the films have been assessed where 1 indicates the first extreme of the criteria and 10 indicates the opposite extreme.

TABLE 1

| Criterion (Category) | The Graduate | Jaws |
|---|---|---|
| Emotional Profile | | |
| (1) Light - Heavy | 6 | 6 |
| (2) Loving - Hateful | 4 | 5 |
| (3) Violent - Gentle | 5 | 2 |
| (4) Happy - Sad | 3 | 5 |
| (5) Sexy - Non sexy | 7 | 5 |
| (6) Fearful - Comfortable | 7 | 2 |
| (7) Funny - Serious | 3 | 8 |
| (8) Surprising - Methodical | 5 | 3 |
| (9) Horrifying - Beautiful | 8 | 2 |
| (10) Inspirational - Bleak | 3 | 4 |
| Content Profile | | |
| (11) Historical - Futuristic | 5 | 5 |
| (12) Fast paced - Slow paced | 4 | 3 |
| (13) Educational - Entertaining | 7 | 6 |
| (14) Weird - Conventional | 4 | 6 |
| (15) Escapist - Challenging | 6 | 6 |
| (16) Short - Long | 5 | 5 |
| (17) Intellectual - Easy Viewing | 4 | 8 |

Fig. 5 is a block diagram of programs stored within the read only memory 17 of the central user station 1. The programs stored in the read only memory 17 consist of a data input program 170, an edit database program 171, a decode input program 172, a calculate preferences program 173 and a show video program 174. The data input program 170 controls the input of data into the database 14. The data input program 170 enables data to be input by a user via the keyboard 16. The input data is displayed on the monitor 15. When the required data has been input, this is then stored in the database 14. The edit database program 171 enables a user to edit data stored in the database 14 to amend the data stored in relation to a particular film. When the edit database program 171 is invoked, this enables a user to scan the database 14 with data for different films being displayed on the monitor 15. The data can then be edited using the keyboard 16 the amended data is then stored in the database 14. The decode input program 172 causes the central processing unit 11 of the central user station 1 to determine the content of a signal received from the high bandwidth distribution system 3 by the interface 10. When the content of a signal received has been determined, the decode input program 172 then invokes either the calculate preferences program 173 or the show video program 174 depending on the type of data which has been received so that the data can be processed appropriately. The calculate preferences program 173 enables data in the database 14 to be ranked in accordance to received user preference data as will be described later. The show video program 174 causes the CPU 11 to instruct the video bank 12 to send a video signal to a user station 2 as will be described in greater detail later.

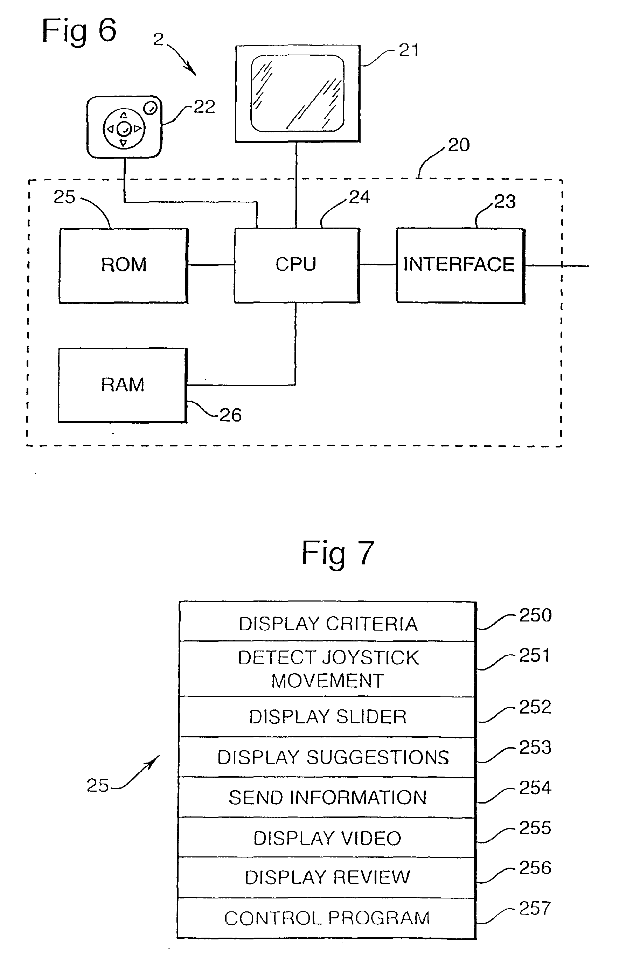

Fig. 6 is a block diagram of a user station 2 of Fig. 2. The user station comprises a set top box 20, a television set 21 and a joystick 22. The set top box 20 comprises an interface 23 which connects a central processing unit 24 to the high speed bandwidth distribution system 3. The central processing unit 24 is further connected to a read only memory 25 in which programs are stored and a random access memory 26 for storing the results of calculations made by the central processing unit 24. The central processing unit 24 is also connected to the joystick 22 and the television set 21. The interface 23 receives data signals from the high band width distribution system 3 and transfers the signals to the central processing unit 24 which processes them in accordance with the programs stored in the read only memory 25. The central processing unit 24 also receives signals from the joystick 20 indicating the position of the joystick 20 and whether the joystick button has been depressed. The central processing unit 24 can also generate signals which are sent to the television set 21 causing information to be displayed on the television screen.

Fig. 7 is a memory map of the read only memory 25 of Fig. 5. This shows the modules of the programs stored in the read only memory 25. The programs stored consist of a program 250 for displaying a selection of criteria from which a user can make a selection on the television screen 21, a program 251 for detecting the movement of the joystick 22, a program 252 for displaying a slider on the television 21, a program 253 for displaying a selection of suggested films on the screen of the television set 21, a program 254 for controlling the sending of information stored in the random access memory 26 via the interface to a central user station 1, a program 255 for displaying video and audio information received via the interface 23 on the television set 21, a program for displaying a review received by the interface 23 on the television screen 21, and a program 257 for controlling the interaction of the above mentioned programs.

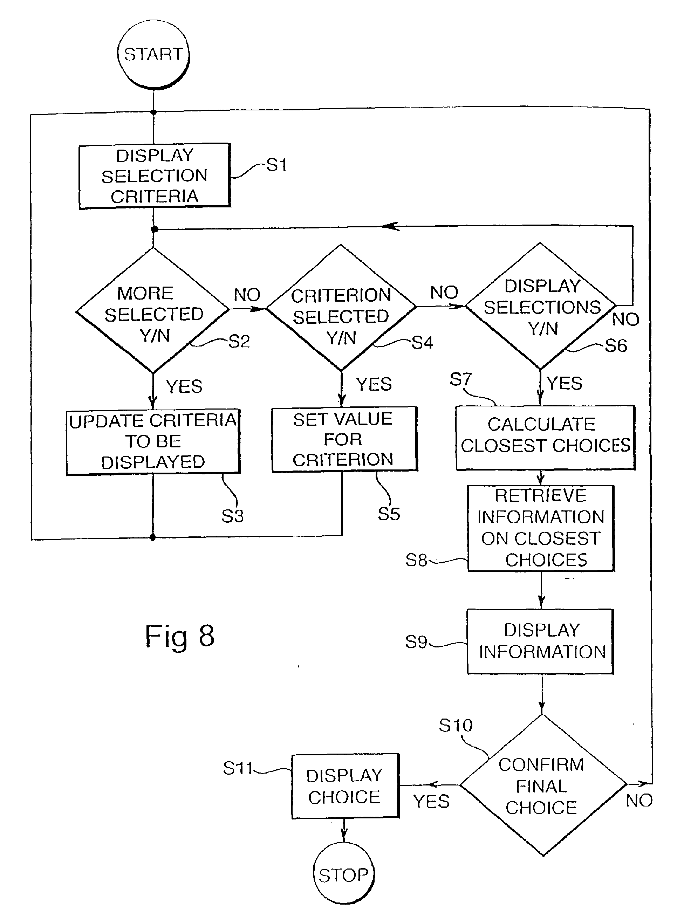

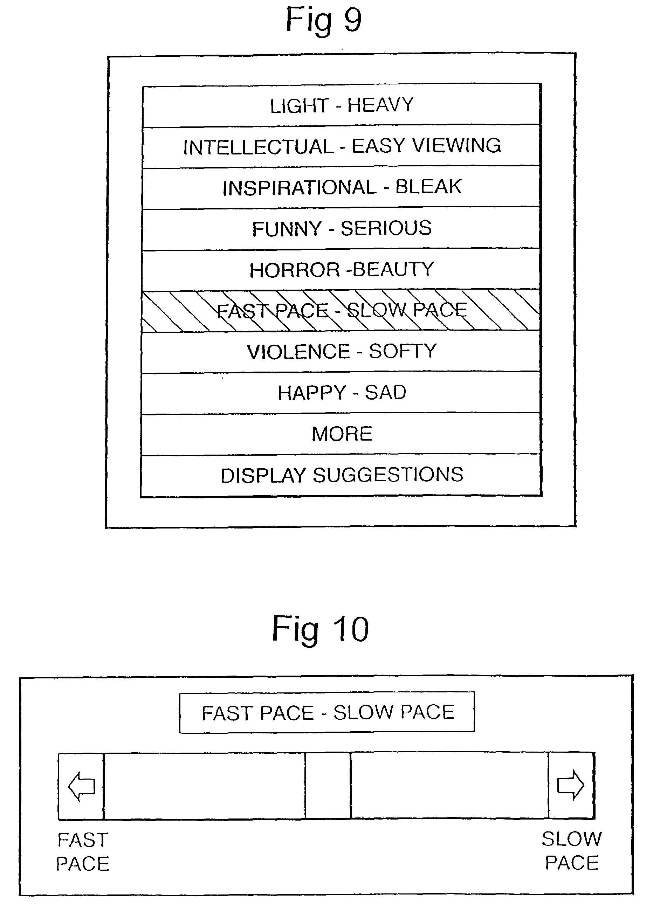

The flow of control of the control program 257 is illustrated in the flow diagram shown in Fig. 8. When the set top box 20 is first switched on, the control program 257 invokes the display criteria program 250 to display a selection of criteria on the screen of the television set 21 (S1). The screen display which is caused to appear on the television screen is illustrated in Fig. 9. As can be seen in Fig. 9, the menu on the screen consists of a list of a selection of extremes of different criteria by which a film in the video bank 12 has been ranked in the database 14 of the user station 1. At the bottom of this menu appear the options of MORE and DISPLAY SUGGESTIONS. One of the options in the menu is highlighted.

Once the menu has been displayed on the screen, control then passes to the detect joystick movement program 251. If the joystick is detected to be moved up or down, the screen display is then updated with the highlighter bar moving up when the joystick is moved forward and the highlighter bar being moved downwards when the joystick is pulled backward.

When the joystick movement detection program 251 detects that the joystick button has been pressed, the control program then determines which of the options appearing on the screen is currently highlighted. If the MORE option is currently highlighted (S2) this causes a different selection of criteria to be chosen to be displayed on the screen (S3) and then this different selection is displayed (S1) by the display criteria program 250. In this way, a manageable number of criteria appear on the screen at any one time allowing the film to be classified in many different ways without the need to have all these different criteria displayed at once.

If the highlight bar is over one of the criteria when the joystick is depressed, this is detected (S4) and the flow control is transferred to the display slider program 252. This causes a slider (S5) to be displayed on the screen as is illustrated in Fig. 10. This consists of a title displaying the criteria which was previously highlighted and a slider which can be moved by the joystick being moved to the left or to the right, the slider moving between the two extremes of the title.

In Fig. 10 the slider which is displayed when the fast pace/slow pace criteria is selected is shown. When the joystick is moved to the left the slider moves towards the fast pace end of the display, when the joystick is moved to the right the slider moves to the slow pace end of the display. In this way, a desired pace of the film can be set. When the slider has been positioned to indicate the desired pace of the film, this can be confirmed by depressing the joystick button. If this is detected a numerical value for the displayed criteria corresponding to the slider position is then stored in the random access memory 26 and the display is replaced by the selection of the criteria menu (S1).

By repeatedly selecting different criteria and setting the value for a particular criteria using the slider program, the user can input his preferred values for a number of different criteria.

When a user has set the values for a desired number of criteria, a selection of suggestions based upon those criteria can be displayed by highlighting the display suggestions option on the menu and then depressing the joystick button. When these circumstances are detected, the control passes to the display suggestions program 253. This causes the CPU to transfer the numerical values of previously selected criteria stored in the random access memory 26 to the central server station 1 via the interface 23 and the high band width distribution system 3. When this data is received by the interface 10 of the central server station 1 the data is then stored in the random access memory 13 of the central server so that the inputted data can be compared with criteria values stored in the database 14 and suitable suggestions can then be made.

The calculate preferences program 173 then causes the CPU 11 to calculate the square of the difference between the values of criteria stored in the random access memory 13 and the value of that criterion as stored in the database against each film 14. The sum of all these values is then determined for a particular film over all the criteria for which a user has set to a preferred value. Mathematically this can be represented by equation:

$$\sum_{k=1}^{n} (\chi_k - p_k)^2$$

where

$\chi_k$ is the stored value for criterion k for the film
$p_k$ is the selected value of criterion k by the user
and k ranges over all the criteria which a user has set to a preferred value.

The calculated value for each film is then stored in the random access memory together with the film number of the film to which it relates. This calculated value is an indication of how closely the user preferred criteria values correspond to the criteria values assigned to a particular film.

The films which have been classified in the database 14 which most closely match the selected criterion values, will have the lowest numbers associated with them. The calculate preferences program 173 then causes the entries in the database to be ranked by their calculated values. The database entries for the most closely matched films are then transferred to the user station 2 via the high band width distribution system 3. The data transferred to the user station 2 is stored in the Random Access Memory 26 so that the name of the film, associated film number, review details and video clip number for the selected films are available for use by the user station. This data is stored together with the calculated value for the film based upon the current set user preferences.

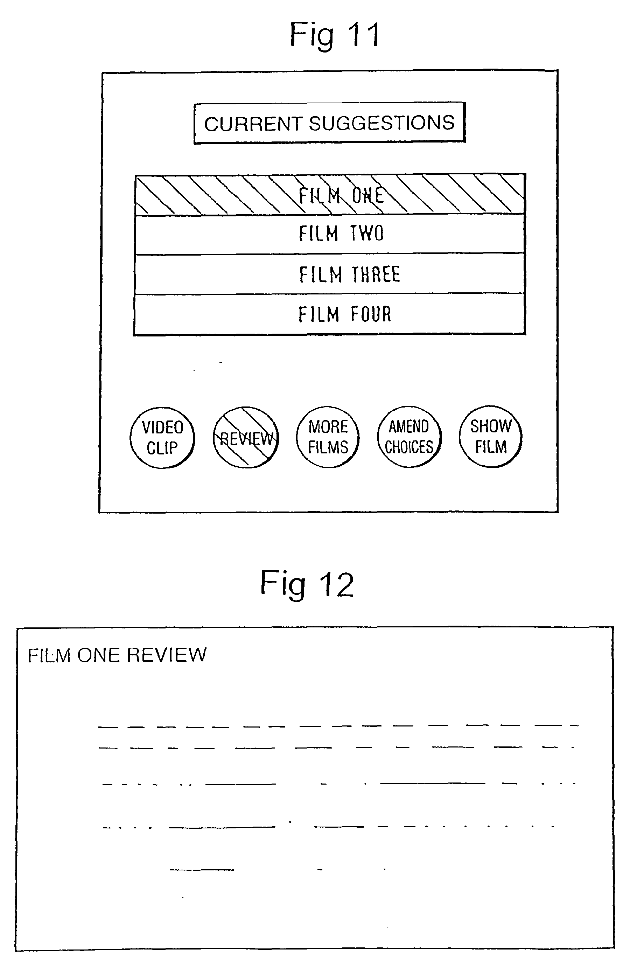

Control is then passed to the display suggestions program 253 which causes a suggestions menu to be displayed on the screen as is illustrated in Fig. 11. The menu displayed lists a number of film names, in this case three, which correspond to the database entries having the lowest calculated values and are hence the films which most closely match the user's preferred input values. The different films can be selected by moving a joystick up or down which is detected by the joystick movement program 251 which causes a highlighter bar. to move on the screen.

The display suggestion program also causes a number of option buttons to be displayed at the bottom of the screen. These are showing VIDEO CLIP for showing a video clip from a film, REVIEW for requesting the display of a review of a film, MORE FILMS for requesting more films, AMEND CHOICES for amending the present criteria selections and SHOW FILM to request that a selected film be shown. The various options can be selected by moving the joystick from side to side. When the desired option is highlighted, it can be selected by pressing the joystick button.

If the VIDEO CLIP button is highlighted when the joystick movement program 251 detects that the joystick button has been depressed, this causes the CPU 24 to retrieve the video clip number associated with the current highlighted film from RAM 26. This video clip number is then transferred from the user station to the central server station 1 via the interface 23 and the high bandwidth distribution system 3. When this data is received by the interface 10 it is passed on to the CPU 11. The received signal is decoded in accordance with the decode input program 172 stored in the read only memory 17, when the type of signal is determined the show video program 174 is invoked which causes a control signal to be sent to the video bank 12. The show video program 174 causes an instruction to be sent to the video bank 12 to send a video signal corresponding to the received video clip number to be sent to the user station 2 by the interface 10 and the high band width distribution system 13. When the video information is received by the user station set top box 20, the video clip is displayed as video information on the television screen 21.

If the REVIEW button is highlighted when the joystick movement detection program 251 detects that the joy stick button has been depressed, this causes the CPU to retrieve the review details corresponding to the film highlighted from RAM 26. These review details are then displayed on the screen 21. An illustration of this is shown in Fig. 12.

If the MORE FILMS button is highlighted when the joystick movement detection program 251 detects that the joystick button is pressed, this causes the CPU to retrieve the calculated values for the films currently displayed from the RAM 26. The greatest of these values is then determined. This is then used so that a new selection of films whose selection numbers are the next greatest to those presently displayed can be made from the data stored in RAM 26. In this way, a greater number of films can be considered by a user than can be displayed on the television screen at any one time.

If the AMEND CHOICES button is highlighted when the joystick movement program 251 detects that the joystick button is pressed, this causes the flow control to pass to the display criteria program 250 which displays the selection criteria on the screen so that a user can amend the current values of the selection criteria and obtain a different selection of film choices.

If the SHOW FILM button is highlighted when the joystick movement program detects that the joystick button is pressed, this causes control to pass to the display video/audio program 255. The CPU 24 then retrieves the film number associated with the current highlighted film from RAM 26. A signal is then sent by the CPU 24 together with the film number to the central server station 1 via the high band width distribution system 3. When the signal and film number are received by the central server station 1, the signal is processed by the CPU 11 in accordance with the decode input program 172 stored in the read only memory 17. When the type of signal is determined, this causes the show video program 174 to be invoked. The show video program 174 causes an instruction to be sent to the video bank 12 to send a video signal corresponding to the received film number to be sent via the high bandwidth distribution system 3 to the set top box 2 so that the film corresponding to the film number is displayed on the television 21.

Although the foregoing description has been made with reference to a video on demand selection system, the embodiment can also be used for the selection of any type of information the subject of which is in electronic form and which can be assessed in a subjective manner where it is possible to assign a value representative of a subjective assessment of the content of the information in a range between two mutually exclusive extreme subjective assessments. For example the embodiment is equally applicable to music and books or literature in general since these can be transmitted to a user electronically. Table 2 below gives examples of profiles for music and Table 3 below gives examples of profiles for books.

TABLE 2

| Category | Y.M.C.A. Village People | Wonderwall Oasis |
|---|---|---|
| Emotional Profile | | |
| (1) Light - Heavy | 2 | 5 |
| (2) Romantic/Love/Slushy- Hate | 5 | 3 |
| (3) Aggressive - Gentle | 3 | 3 |
| (4) Happy - Sad | 2 | 6 |
| (5) Soothing - Rousing | 7 | 6 |
| (6) Eerie - Cosy | 5 | 5 |
| (7) Frivolous - Serious | 3 | 7 |
| (8) Rhapsodic - Methodical | 5 | 4 |
| (9) Warm - Bleak | 3 | 6 |
| (10) Upbeat - Downbeat | 1 | 5 |
| Content Profile | | |
| (11) Fast beat - Slow beat | 3 | 5 |
| (12) Weird - Normal | 5 | 7 |
| (13) Popular - Obscure | 1 | 1 |
| (14) Short - Long | 5 | 5 |
| (15) Intellectual - Easy Listening | 9 | 8 |
| (16) Lyrical - Rock | 7 | 5 |
| (17) Simple - Complex | 3 | 6 |

TABLE 2 (continued)

| Content Profile | | |
|---|---|---|
| (18) Quiet - Loud | 7 | 7 |

TABLE 3

| Category | Catcher in the Rye | Neuromancer |
|---|---|---|
| Emotional Profile | | |
| (1) Light - Heavy | 6 | 7 |
| (2) Loving - Hateful | 4 | 5 |
| (3) Violent - Gentle | 5 | 2 |
| (4) Happy - Sad | 3 | 5 |
| (5) Sexy - Non sexy | 7 | 5 |
| (6) Fearful - Comfortable | 7 | 2 |
| (7) Funny - Serious | 3 | 8 |
| (8) Surprising - Methodical | 5 | 3 |
| (9) Horrifying - Beautiful | 8 | 2 |
| (10) Inspirational - Bleak | 3 | 4 |
| Content Profile | | |
| (11) Historical - Futuristic | 5 | 5 |
| (12) Fast paced - Slow paced | 4 | 3 |
| (13) Educational - Entertaining | 7 | 6 |
| (14) Weird - Conventional | 4 | 6 |
| (15) Escapist - Challenging | 6 | 6 |
| (16) Short - Long | 5 | 5 |
| (17) Intellectual - Easy | Reading 4 | 8 |

Although in the above embodiment the information which is subjectively assessed according to a number of different criteria is provided to the user after a selection has been made, it is possible that the present invention could be used as a means of identifying information and providing a means by which the item embodying the information could be obtained. For example, if a number of books were subjectively assessed on a number of criteria representative of a relative subjective assessment of the book relative to two mutually exclusive extreme subjective assessments, the system could be used to provide a user with titles of books which match input user preference data. In such a system there would be no need to have a store of information to be retrieved such as the video bank 12 as shown in Fig. 3. In addition to providing a user with a book title, the system could also provide means by which the user station 2 could be used to send a signal to the central server station 1 via the high band width distribution system 3 so that a user could order the book. When such an order was received by the central server station 1, a book could then be dispatched using a conventional method.

Another example of an item which can be subjectively assessed but which could not be provided in the form of a signal which was sent via the high band width distribution system 3 is the ordering of wine. Table 4 below gives examples of profiles for wines.

TABLE 4

| Category | Torres Vino Sol | Chateau Abbaye St. Femme |
|---|---|---|
| **Type** | | |
| (1) White - Rose - Red | 0 | 2 |
| (2) Still - Sparkling | 0 | 0 |
| **Taste Profile** | | |
| (3) Sweet - Dry | 7 | 9 |
| (4) Flabby - Acid 1 | 2 | 3 |
| (5) Astringent (Tart) - Soft | 8 | 4 |
| (6) Thin bodied - Heavy bodied | 8 | 7 |
| (7) Weak fruit - Concentrated fruit | 9 | 4 |
| (8) Silky texture - Rough texture | 4 | 9 |
| (9) Short - Long | 5 | 3 |
| (10) Fruit character: | grapy _fruity_ floral<br>vegetal spicy woody<br>smoky animal cooked<br>yeasty sulphury ripe | grapy fruity floral<br>vegetal spicy _woody_<br>smoky animal cooked<br>yeasty sulphury ripe |
| **Features** | | |
| (11) Vintage - New | 1993 | 1996 |
| (12) Cheap - Expensive | £8.50 | £4.00 |
| (13) Region | Spain | France |

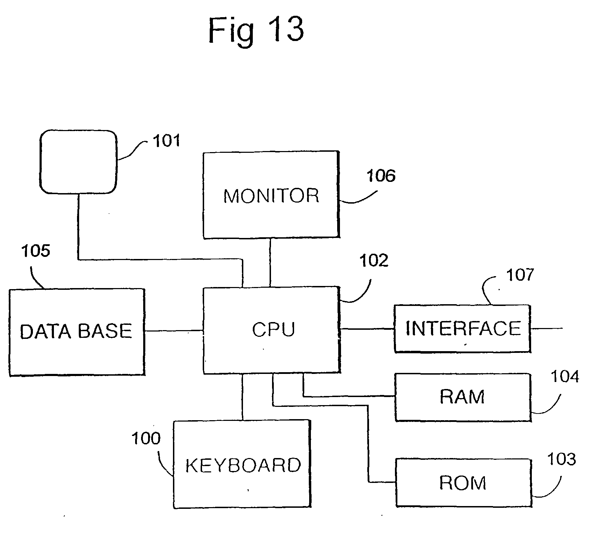

Fig. 13 shows a further embodiment of the present invention applied to a computer used for ordering wine from a supplier. The system comprises a keyboard 100, a pointing device 101 such as a mouse, joystick or pen, a CTU 102, ROM 103, RAM 104, a stored database 105, a monitor 106 and an interface 107. The CPU 102 is arranged to process signals received from the keyboard 100 and the joystick 101 in accordance with a program stored in the ROM 103. As a result of processing, variables are stored in the RAM 104. The CPU can also retrieve information from the database 105. As a result of the processing, information is displayed on the monitor 106. When a selection has been made, a signal can be generated by the CPU 102 to send an order to a supplier via the interface 107.

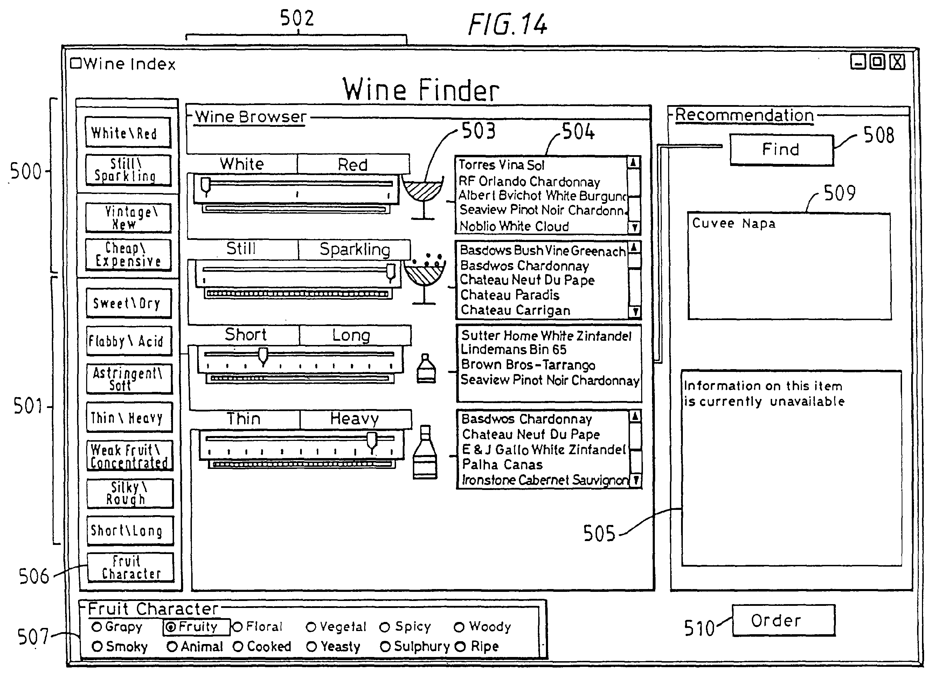

Fig. 14 is an example of a screen display with the present invention applied to an apparatus for ordering wine.

When the apparatus shown in Fig. 12 is switched on, the CPU 102 causes a screen display such as the one shown in Fig. 13 to be displayed on the monitor 106. On the left-hand side of the screen display there are shown a number of categories 500 and 501 by which wines may be classified. A user can choose to make a selection within a category by moving the pointing device 101 or making key strokes on the keyboard 100. The category shown at the top of the column on the left-hand side of the screen display shown in Fig. 14 500 are categories in which an objective assessment of the wine can be made. The categories shown in Fig. 14 are red/white, still/sparkling, vintage/new and cheap/expensive. In contrast, the categories in the lower half of the column, left-hand side 501 are categories in which a subjective assessment of the wine can be made. In Fig. 14 these are sweet/dry, flabby/acid, astringent/soft, thin/heavy, weak fruit/concentrated, silky/rough and short/long. In a manner similar to the previous embodiment, each of the entries to each of the different wines stored in the database 105 is assessed according to each of these categories. These assessments are then stored together with the name of the wine and information about the wine in the database 105.

When a user wishes to make a selection within a category, he first moves the pointing device 101 to move a pointer to select one of the categories 500 and 501. This is detected by the CPU 102 which causes the category to be highlighted and a slider 502, a morph icon 503, and a selection menu 504 to appear on the monitor 106. The slider can be moved to the left or to the right using the pointing device 101. As the slider moves the morph icon 503 changes in an appropriate manner. For example the morph icon for the white/red category might be in the form of a wine glass which changes colour as a selection between white, rose and red wine was made. When a user has decided on his selection within the category, the value of the present selection is stored in RAM 104. The CPU 102 then compares the value of the present selection with the previous assessments of wines stored in the database 105. On the basis of this comparison, the wines which most closely match the user's selection in that category are then displayed in the selection menu 504. In this way, a user can determine those wines which most closely match his indicated preferences in any particular category. If the user wishes to obtain further information on a particular wine, he can move the pointing device 101 to the selection menu 504 which causes an entry to be highlighted within the selection menu 504 and for further information to be displayed in an additional information window 505 on the right hand side of the screen.

By selecting a number of different categories, the user can therefore cause a number of sliders to appear on the screen and indicate a preferred value for more than one category. For each of the categories selected, a slider 502, a morph icon 503 and an information window 504 will be caused to appear on the monitor 106 by the CPU. For a category such as fruit character 506 for which a slider is inappropriate, the menu 507 is caused to appear by the CPU 102 on the monitor 106 where the user can make his selection by pointing at an appropriate selection using the pointing device 101.

At any point after having made a selection within at least one category, the user can move the pointer to a FIND icon 508 which causes the CPU 102 to search the database in the manner previously described for the earlier embodiment on the basis of a combination of all the selections made. The wines which most closely match the combination of all the selections within the categories are then displayed in a separate menu 509. As with the selection menus, a user can cause entries within the menu 509 to be highlighted so that further information is displayed in the information window 505. When a user is satisfied with his selection, he can move the pointer to an order icon 510. When the CPU 102 detects that the order icon is selected, this causes a signal to be sent via the interface 10 to send an order to a wine supplier via a high band width distribution system to place an order for the wine which is currently highlighted in either the selection menu 504 or the menu 509.

Although in this embodiment an ordering system is described in which a signal is sent to a wine supplier via an interface 107, it would be possible that the above embodiment could be used merely to find information on a wine, in which case no order icon 510 would appear on the monitor 106 and there will be need for an interface 107 to connect the apparatus to a high band width distribution system.

As can be seen in the foregoing embodiments, the present invention can be embodied as a central database with one or more remote user interfaces, or a system a single location including both the user interface and the database.

The present invention can be applied to the identification and retrieval of information of any form stored in a database. A user can search for information without having to exactly identify a classification to which the information must belong. An aspect of the present invention allows for information which closely corresponds with the input user preference data to be retrieved. Thus it is possible to guarantee that information will be retrieved and this information will be the best fit to the information desired by the user. The information retrieved can be retrieved and displayed as a single piece of information which is the best fit or as seen in Fig. 14 as a list of a number of sets of information which best fits the query. These can be displayed in order of best fit to the query.

Although reference has been made to a value being calculated based on the sum of the squares of differences between stored criteria values and user selected criteria values, any suitable function which relates to these two values could be used. For example, a formula in which different weight was given to a criteria on the basis of the order in which selections of criteria were made could be used, in which case a scaling factor in accordance with the order in which the criteria selected would be applied to the squares of differences between stored criteria values and user preference criteria values when these squares of differences are summed together. Although reference has been made to some of the squares of differences between stored criteria values and selected criteria values for all the possible criteria, it is possible that a sum could be made only for those criteria which have been selected, in which case it would not be necessary to set the other criteria to a default value.

An alternative method of determining the relative fit of the classification data and the user preference data is to consider the values of the classification data and the desired values of the user preference data as two N dimensional vectors where N is an integer representing the number of categories for the received user preference data. Using such vectors the relative fit can be determined simply by determining which of the vectors for the classification data has the closest angle to the vector for the user preference data.

Although reference has been made to a graphical menu interface for making the selections, any other suitable form of interface could be used such as pull down menus or a 3-D graphical interface.

All of the embodiments discussed hereinabove can be implemented on computers under the control of computer programs. The present invention can thus be embodied as a computer program stored on a computer readable storage medium such as a floppy disc, hard disc, CD ROM or read only memory (ROM) or carried on a transient carrier medium such as an electronic, optical or microwave signal carrying the computer code.

Although the present invention has been described hereinabove with reference to specific embodiments, it will be clear to a skilled person in the art that the present invention is not limited to such embodiments and modifications within the spirit and scope of the present invention will be apparant to a skilled person in the art.

## Claims

1. Apparatus for retrieving information, the apparatus comprising:

   storage means storing a database comprising a plurality of records, each record comprising information and associated classification data, said classification data including at least one value, the or each value comprising a predetermined subjective rating for the associated information in a category;
   receiving means for receiving user preference data identifying at least one said category of information to be searched for and a corresponding desired value for the or each category;
   comparison means for comparing said user preference data with said classification data in said database to determine the relative fit of said classification data with said user preference data; and
   retrieval means for retrieving information from said database on the basis of said determined relative fit.

2. Apparatus according to claim 1 wherein said storage means stores the or each value of said classification data as a value within a range representing possible subjective ratings relative to two mutually exclusive extreme subjective assessments.

3. Apparatus according to claim 1 or claim 2 wherein said storage means stores at least one objective datum included in said classification data for the associated information, said receiving means is adapted to receive at least one desired objective datum in said user preference data.

4. Apparatus according to any preceding claim wherein said storage means stores the information in the form of a summary or description of something which can be subjectively categorised, and the or each value comprises a predetermined subjective rating of one said something.

5. Apparatus according to claim 4 wherein said storage means stores the information in the form of a summary or description of an item, the or each value comprises a predetermined subjective rating of one said item, and the apparatus includes means for receiving an order for a said item from a user.

6. Apparatus according to claim 5 wherein said item is transmittable in electronic form, the apparatus including transmission means for transmitting said item to said user.

7. Apparatus according to any preceding claim wherein said comparison means is adapted to determine a value indicative of the relative fit of said classification data with said user preference data, and said retrieval means is adapted to retrieve the information from said database on the basis of said value.

8. Apparatus according to claim 7, wherein said comparison means is adapted to determine said value indicative of the relative fit of said classification data with said user preference data as the sum of the squares of the differences between said classification data and said user preference data received by said receiving means for all of said categories identified by said user preference data.

9. Apparatus according to claim 7 wherein said comparison means is adapted to determine said value indicative of the relative fit of said classification data with said user preference data by determining an angular difference between vectors defined by said values of said classification data and said desired values of said user preference data for all of the categories identified by said user preference data.

10. Apparatus according to any preceding claim, wherein said retrieval means is adapted to retrieve information from a plurality of records of said database, wherein the retrieved information is the information having the closest fit with said user preference data.

11. Apparatus according to any one of claims 7 to 9, wherein said retrieval means is adapted to retrieve said information from said database in order of the values indicating the relative fit of said classification data associated with said information and said user preference data.

12. Apparatus according to any one of claims 7 to 9, wherein said retrieval means is adapted to retrieve information associated with a value which indicates that the classification data is the closest fit with said user preference data.

13. Apparatus according to any preceding claim wherein said comparison means is adapted to compare user preference data for each of a plurality of categories with said classification data for respective categories individually to determine an individual relative fit for each category, and said retrieval means is adapted to retrieve information from said database on the basis of each individual relative fit.

14. Apparatus according to any preceding claim wherein said receiving means is adapted to receive user preference data for each of a plurality of categories sequentially.

15. Apparatus according to claim 14 wherein said comparison means is adapted to determine the relative fit of said classification data with said user preference data for all of the received user preference data as each is received.

16. Apparatus according to claim 14 wherein said receiving means is adapted to receive an indication that the most recently received user preference data is the final data, and said comparison means is adapted to determine the relative fit of said classification data with said user preference data for all of the received user preference data when said receiving means receives said indication.

17. Apparatus according to any preceding claim, further comprising:

input means for inputting user preference data identifying at least a category of information to be searched for; and
output means for outputting information retrieved from said database by said retrieval means.

18. Apparatus according to any one of claims 1 to 16 further comprising a user interface comprising:

means for selecting at least one said category;
input means for inputting a value for the or each category, said value comprising a subjective rating for information to be retrieved;
transmitting means for transmitting information identifying the or each selected category and the or each respective value as said user preference data to said receiving means;
means for obtaining the information retrieved by said retrieval means; and
display means for displaying the retrieved information.

19. Apparatus according to claim 18 including means for generating a graphical illustration related to the or each input value to aid the user's perception of the input values and selected categories.

20. Apparatus according to claim 18 or claim 19 wherein said selecting means and said input means comprise a graphical user interface provided in conjunction with said display means.

21. Apparatus for transmitting information to and receiving information from the apparatus of any preceding claim, said apparatus comprising:

input means for inputting user preference data identifying at least one category of information to be searched for and a corresponding desired value for the or each category;
transmission means for transmitting said user preference data to said receiving means; and
reception means for receiving information retrieved from said database by said retrieval means.

22. Apparatus according to claim 21, wherein said input means comprises:
    means for generating a graphical user interface.

23. Apparatus according to claim 22 wherein said means for generating a graphical user interface is adapted to generate a graphical illustration related to the or each input value to aid the user's perception of the input values and categories.

24. An information supply system comprising:

    the apparatus in accordance with any one of claims 1 to 20, wherein said information identifies an information signal;
    an information bank having stored therein a plurality of information signals;
    user selection means for selecting desired information signals using said retrieved information from said database; and
    information supplying means for supplying the selected information signals from said information bank to information output means.

25. A method of retrieving information from a database, the database comprising a plurality of records, each record comprising information and associated classification data, said classification data including at least one value, each value comprising a predetermined subjective rating for the associated information in a category, the method comprising the steps of:

    receiving user preference data identifying at least one said category of information to be searched for and a corresponding desired value for the or each category;
    comparing said user preference data with said classification data to determine the relative fit of said classification data with said user preference data; and
    retrieving information from said database on the basis of said determined relative fit.

26. A method according to claim 25 wherein the or each value lies within a range representing possible subjective ratings relative to two mutually exclusive subjective assessments.

27. A method according to claim 25 or claim 26 wherein at least one objective datum is included in said classification data for the associated information and is stored, and the receiving step includes the step of receiving at least one desired objective datum in said user preference data.

28. A method according to any one of claims 25 to 27 wherein the stored information comprises a summary or description of something which can be subjectively categorised, and the or each value comprises a predetermined subjective rating of one said something.

29. A method according to claim 28 wherein the information comprises a summary or description of an item, the or each value comprises a predetermined subjective rating of one said item, and the method includes the step of receiving an order for a said item from a user.

30. A method according to claim 29 wherein said item is transmittable in electronic form, the method including the step of transmitting said item to said user.

31. A method according to any one of claims 25 to 30 wherein the comparing step comprises determining a value indicative of the relative fit of said classification data and said user preference data, and the retrieving step comprises retrieving the information from said database on the basis of said value.

32. A method according to claim 31 wherein the comparing step comprises determining said value indicative of the relative fit of said classification data with said user preference data as the sum of the squares of the differences between said classification data and said user preference data for all of said categories identified by said user preference data.

33. A method according to claim 31 wherein said comparing step comprises determining said value indicative of the relative fit of said classification data with said user preference data by determining an angular difference between vectors defined by said values of said classification data and said desired values of said user preference data for all of the categories identified by said user preference data.

34. A method according to any one of claims 25 to 33, wherein said retrieving step comprises retrieving information from a plurality of records of said database, wherein the retrieved information is the information having the closest fit with said user preference data.

35. A method according to any one of claims 31 to 33, wherein said retrieving step comprises retrieving said information from said database in order of the values indicating the relative fit of said classification data associated with said information and said user preference data.

36. A method according to any one of claims 31 to 33, wherein said retrieving step comprises retrieving information associated with a value which indicates that the classification data is the closest fit with said user preference data.

37. A method according to any one of claims 25 to 36 wherein said comparing step includes the steps of comparing user preference data for each category with said classification data for respective categories individually to determine an individual relative fit for the or each category, and the retrieving step includes retrieving information from said database on the basis of the or each individual fit.

38. A method according to any one of claims 25 to 37 wherein the receiving step is adapted to receive user preference data for each of a plurality of categories sequentially.

39. A method according to claim 38 wherein the comparing step comprises determining the relative fit of said classification data with said user preference data for all of the received user preference data as each is received.

40. A method according to claim 38 wherein the receiving step includes receiving an indication that the most recently received user preference data is the final data, and the comparing step comprises determining the relative fit of said classification data with said user preference data for all of the received user preference data when said indication is received.

41. A method according to any one of claims 25 to 40, further comprising the steps of:
    inputting said user preference data, and outputting the information retrieved from said database.

42. A method according to any one of claims 25 to 41, further comprising the steps of:

    generating said classification data; and
    storing said information in association with said classification data in said database.

43. A carrier medium carrying machine readable instructions for carrying out the method of any one of claims 25 to 42.

44. A storage medium storing a database storage means comprising a plurality of records, each record comprising information and associated classification data, said classification data including at least one value, the or each value comprising a predetermined subjective rating for the associated information in a category for use in any of claims 1 to 24.

Fig 1

## Fig 2

CENTRAL
SERVER
STATION — 1

HIGH
BANDWIDTH
DISTRIBUTION — 3

USER STATION — 2
USER STATION
USER STATION
USER STATION — 2
USER STATION — 2

## Fig 3

VIDEO
BANK — 12

MONITOR — 15

DATA BASE — 14

CPU — 11

INTERFACE — 10

RAM — 13

KEYBOARD — 16

ROM — 17

1

# Fig 4

14

| FILM NAME |
| --- |
| FILM NUMBER |
| CRITERION 1 |
| CRITERION 2 |
| . |
| CRITERION N |
| REVIEW DETAILS |
| VIDEO CLIP NUMBER |

| FILM 1 |
| --- |
| . |
| . |
| . |
| FILM K |
| . |
| . |
| . |
| FILM N |

# Fig 5

17

| DATA INPUT | 170 |
| --- | --- |
| EDIT DATABASE | 171 |
| DECODE INPUT | 172 |
| CALCULATE PREFERENCES | 173 |
| SHOW VIDEO | 174 |

# Fig 6

# Fig 7

| |
|---|
| DISPLAY CRITERIA — 250 |
| DETECT JOYSTICK MOVEMENT — 251 |
| DISPLAY SLIDER — 252 |
| DISPLAY SUGGESTIONS — 253 |
| SEND INFORMATION — 254 |
| DISPLAY VIDEO — 255 |
| DISPLAY REVIEW — 256 |
| CONTROL PROGRAM — 257 |

Fig 8

# Fig 9

| |
|---|
| LIGHT - HEAVY |
| INTELLECTUAL - EASY VIEWING |
| INSPIRATIONAL - BLEAK |
| FUNNY - SERIOUS |
| HORROR -BEAUTY |
| FAST PACE - SLOW PACE |
| VIOLENCE - SOFTY |
| HAPPY - SAD |
| MORE |
| DISPLAY SUGGESTIONS |

# Fig 10

FAST PACE - SLOW PACE

FAST
PACE

SLOW
PACE

# Fig 11

CURRENT SUGGESTIONS

| FILM ONE |
| FILM TWO |
| FILM THREE |
| FILM FOUR |

( VIDEO CLIP )  ( REVIEW )  ( MORE FILMS )  ( AMEND CHOICES )  ( SHOW FILM )

# Fig 12

FILM ONE REVIEW

# Fig 13

FIG.14